# EUROPÄISCHE PATENTSCHRIFT

(11) **EP 0 749 395 B1**
(45) Veröffentlichungstag und Bekanntmachung des Hinweises auf die Patenterteilung: **22.10.1997**
(21) Anmeldenummer: 95914308.2
(22) Anmeldetag: 24.03.1995
(51) Int. Cl.: B65G 49/04, B05C 3/10

(54) **VORRICHTUNG ZUR OBERFLÄCHENBEHANDLUNG VON FAHRZEUGKAROSSERIEN**
CAR BODY SURFACE TREATMENT DEVICE
DISPOSITIF DE TRAITEMENT DE LA SURFACE DE CARROSSERIES DE VEHICULES

(30) Priorität: 25.03.1994 DE 4410477
(43) Veröffentlichungstag der Anmeldung: 27.12.1996
(73) Patentinhaber: ABB FLÄKT AB, S-120 86 Stockholm (SE)
(72) Erfinder: HECKMANN, Norbert, D-34326 Morschen/Konnefeld (DE)
(74) Vertreter: Füchsle, Klaus, Dipl.-Ing.
(86) Internationale Anmeldenummer: EP9501125
(87) Internationale Veröffentlichungsnummer: WO9526311

(56) Entgegenhaltungen:
- GB-A- 1 434 348
- GB-A- 2 229 381
- US-A- 2 598 163
- PATENT ABSTRACTS OF JAPAN vol. 9, no. 278 (C-312) 6. November 1985 & JP,A,60 125 275 (DAIHATSU KOGYO KK) 4. Juli 1985

## Beschreibung

Die Erfindung betrifft eine Vorrichtung zur Oberflächenbehandlung einer oder mehrerer Fahrzeugkarosserien mit einer Drehvorrichtung, mit der mindestens eine auf einem Ladeschlitten angebrachte Fahrzeugkarosserie lösbar verbindbar ist, und die durch Drehung die Fahrzeugkarosserie in ein Behandlungsbad eintaucht und sie wiederum durch eine Drehung aus diesem herausführt, sowie mit Transporteinrichtungen zum Auf- und Abtransportieren des Ladeschlittens auf die bzw. von der Drehvorrichtung.

Eine Vorrichtung zur Oberflächenbehandlung von Fahrzeugkarosserien, die durch Drehung in ein Behandlungsbad eingetaucht bzw. durch Gegendrehung aus diesem herausgeführt werden, ist aus der GB 2 229 381 bekannt. Bei dieser bekannten Vorrichtung wird eine Fahrzeugkarosserie mit einer Ladepalette fest verbunden. Diese Einheit aus Ladepalette mit darauf angebrachter Fahrzeugkarosserie wird auf einen Rollschlitten aufgesetzt. Dieser Rollschlitten ist mit nicht angetriebenen Rollen ausgestattet, die eine Verschiebung seitlich zur Fahrzeugkarosserie-Längsachse ermöglichen. Mit Hilfe eines solchen, nicht angetriebenen Rollschlittens wird die Ladepalette mit der Fahrzeugkarosserie vom Behandlungsbad zu weiteren Bearbeitungsstationen transportiert.

Der gesamte Verbund, bestehend aus Fahrzeugkarosserie, Ladepalette sowie Rollschlitten, wird auf eine Halterung geschoben, die über jedem Behandlungsbad angebracht ist. Diese Halterung besitzt eine Drehachse senkrecht zur Fahrzeugkarosserie-Längsachse bzw. parallel zur Transportrichtung. Durch Drehung um die Drehachse um 180° kann nun der gesamte Verbund von Fahrzeugkarosserie, Ladepalette und Rollschlitten in das Behandlungsbad eingetaucht werden. Während des Eintauchvorgangs sind die besagte Halterung und die Einheit aus Fahrzeugkarosserie, Ladepalette und Rollschlitten durch Verschlußbolzen miteinander verbunden.

Zum Transport der Fahrzeugkarosserien bzw. der Rollschlitten dient ein Förderband, das sich über mehrere Behandlungsstationen mit zugehörigen Behandlungsbecken erstreckt. Diese Behandlungsstationen liegen seitlich nebeneinander. Das Förderband transportiert die Rollschlitten, auf denen jeweils eine Ladepalette mit der Fahrzeugkarosserie aufgesetzt ist, von Behandlungsbecken zu Behandlungsbecken. An dem Förderband sind hierfür senkrecht stehende Plattenstücke montiert, die an dem Rollschlitten anliegen.

Diese Art der Vorrichtung zum Einbringen einer Fahrzeugkarosserie hat den Vorteil, daß mit einem einfachen Mechanismus das Aufschwappen der Behandlungsflüssigkeit im Behandlungsbad dadurch minimiert wird, daß die Fahrzeugkarosserie über die Front- oder Heckseite in das Behandlungsbad eingedreht wird. Die in der Fahrzeugkarosserie eingeschlossene Luftmenge kann bei dem Eindrehvorgang kontinuierlich aus den Fenstern der Fahrzeugkarosserie entweichen.

Der Aufbau dieser Vorrichtung ist relativ kompliziert und nur für kleine Anlagen geeignet. Wenn eine Fahrzeugkarosserie eingetaucht ist, muß die nächste Karosserie so lange warten, bis die Prozeßzeit der ersten Karosserie abgelaufen ist. Diese Prozeßzeit beträgt bei einzelnen Prozeßstufen bis zu drei Minuten und bei kathodischer Tauchlackierung noch länger.

In der DE 43 04 145 C1 ist eine Vorrichtung der genannten Gattung beschrieben, bei der ebenfalls mittels Drehen eine Fahrzeugkarosserie in ein Behandlungsbad eintaucht. Zudem ist es bei eingetauchter Fahrzeugkarosserie möglich, daß eine weitere Fahrzeugkarosserie auf diese Drehvorrichtung aufgeschoben und lösbar verbunden wird bzw. die Drehvorrichtung überfahren kann.

Bei der bekannten Vorrichtung dient ein Ladeschlitten zur Aufnahme und Fixierung der Fahrzeugkarosserie. Der Ladeschlitten mit der Fahrzeugkarosserie wird mittels einer oder mehrerer angetriebener Laufrollen auf die Drehvorrichtung aufgeschoben und dort mittels Fixiervorrichtungen lösbar mit dieser verbunden. Die Drehvorrichtung ist über dem Behandlungsbad angebracht und umfaßt eine Drehachse quer zur Transportrichtung der Fahrzeugkarosserien. Das Einbringen der Fahrzeugkarosserie erfolgt nun durch Drehen der Drehvorrichtung derart, daß die Fahrzeugkarosserie über deren Front- oder Heckseite in das Behandlungsbad eingetaucht wird. Zum Weitertransport der Ladeschlitten mit den Fahrzeugkarosserien sind jeweils eine oder mehrere der Laufrollen auf Ober- und Unterseite der Drehvorrichtung angetrieben.

Nachteilig an dieser Konstruktion ist, daß die Drehvorrichtung eine Vielzahl mechanisch beweglicher Teile (Führungslaufrollen und Laufrollen zur Bewegung des Ladeschlittens) umfaßt, die infolge des Lackierprozesses stark verschmutzen und das Lackbad mit angetrockneten Lackresten verunreinigen. Durch das wiederholte Eintauchen der Rollen in das Behandlungsbad ist deren Funktion schon nach kurzer Zeit nicht mehr gewährleistet.

Das der Erfindung zugrundeliegende technische Problem besteht darin, eine Vorrichtung zur Oberflächenbehandlung von Karosserien zu schaffen, bei der beim Einbringen der Fahrzeugkarosserien durch Drehung ein Verschmutzen der mechanisch beweglichen Teile weitgehend vermieden wird.

Dieses technische Problem wird bei einer gattungsgemäßen Vorrichtung dadurch gelöst, daß die Transporteinrichtungen außerhalb des Behandlungsbades angebracht und die im Drehbereich der Drehvorrichtung liegenden Transporteinrichtungen aus diesem heraus- bzw. hereinbewegbar sind.

Der Erfindung liegt der Gedanke zugrunde, die zum Ein- und Austransport der Ladeschlitten mit den darauf befestigten Fahrzeugkarosserien dienenden Transporteinrichtungen wie die Antriebs- und Führungsrollen, Laufbänder etc., derart anzuordnen, daß sie beim Behandeln der Fahrzeugkarosserien nicht mit in das Behandlungsbecken eintauchen, d.h. vom Ladeschlitten und der Drehvorrichtung getrennt befestigt sind. Hierdurch können starke Verschmutzungen und eventuell auftretende Funktionsstörungen an den Antriebs- und Führungsrollen sowie den eventuell benötigten Laufbändern weitgehend verhindert werden. Des weiteren sind durch die bewegliche Gestaltung der Transporteinrichtungen, die im Drehbereich der Drehvorrichtung mit der darauf angebrachten Fahrzeugkarosserie liegen, diese aus dem Drehbereich herausführbar und wenn nötig wieder hereinführbar. Dadurch kann eine Drehbewegung der Drehvorrichtung in ihrem Drehwinkel unbegrenzt erfolgen. Des weiteren ermöglichen die hinein- und herausfahrbaren Transporteinrichtungen ein Schwenken der auf der Drehvorrichtung angebrachten Fahrzeugkarosserie im getauchten Zustand, wodurch den eingeschlossenen Luftblasen ein besseres Entweichen ermöglicht wird, was zu einem qualitativ höherwertigen Beschichtungsergebnis führt.

Durch das Herausführen der beweglichen Transporteinrichtungen aus dem Drehbereich der Drehvorrichtung bei der Austauchdrehbewegung wird auch eine Verschmutzung der Transport- bzw. Fördereinrichtungen infolge von an der Fahrzeugkarosserie herabfließenden Lacks minimiert und somit die Gefahr der Verschmutzung des Behandlungsbades durch an den Transport- bzw. Fördereinrichtungen angetrocknete Lackreste verringert.

Des weiteren wird der konstruktive Aufwand bei der Gestaltung der Drehvorrichtung wesentlich vereinfacht, wodurch sich geringere Herstellungskosten als auch geringere Kosten zur Steuerung der Anlage und Wartung ergeben.

Insbesondere ermöglicht der einfache Aufbau der erfindungsgemäßen Vorrichtung eine Erhöhung der Taktrate zum Einbringen der Fahrzeugkarosserien in das Behandlungsbad dadurch, daß bereits bei noch nicht vollständig eingetauchter Fahrzeugkarosserie mit dem Transport einer weiteren Fahrzeugkarosserie über das Behandlungsbad begonnen werden kann, wodurch die Kapazität der Gesamtanlage (mehrerer Bäder in Serie geschaltet) erhöht wird. Insgesamt wird durch diese Maßnahmen das Tauchverfahren bezüglich erzielbarer Beschichtungsqualität und Wirtschaftlichkeit verbessert.

Vorteilhafterweise umfassen die Transporteinrichtungen zum Auf- und Abtransportieren des Ladeschlittens mit der darauf angebrachten Fahrzeugkarosserie auf die bzw. von der Drehvorrichtung Führungs- und angetriebene Antriebsrollen. Durch diesen einfachen Aufbau wird ein Ladeschlitten zwischen einer Anzahl sich gegenüberliegender Rollen geführt, wobei eine oder mehrere dieser Rollen angetrieben sind, so daß durch Reibungsübertragung der Ladeschlitten bewegt wird. Außerdem kann hierdurch ein Ladeschlitten auf einfache Weise von einer Behandlungsstation zur nächsten weitergegeben werden.

Da die im Drehbereich der Drehvorrichtung liegenden Transporteinrichtungen bei Bedarf aus dem Drehbereich heraus- und hereinführbar sind, ist die unbegrenzte Schwenkung einer eingetauchten Fahrzeugkarosserie ermöglicht. Zudem werden - wie bereits erwähnt - Lackier- und Farbreste, die das Bad verunreinigen, weitgehend vermieden, indem beim Austauchen der bereits behandelten Fahrzeugkarosserie die Transporteinrichtungen aus dem Tropfbereich wegbewegbar sind.

Eine sehr einfache und konstruktiv billige Lösung zum Herein- und Herausführen der Transporteinrichtung besteht darin, diese mit einer Verschiebeeinrichtung, wie z.B. ein Hubzylinder, elektrischer Antrieb oder auch Kettenantrieb, verschiebbar über dem Behandlungsbad auf sich gegenüberliegenden Seiten anzubringen, so daß der Ladeschlitten mit seinen Randbereichen auf den Führungs- und Antriebsrollen geführt bzw. weitertransportiert werden kann. Genauso geeignet ist auch ein Wegdrehen der Transporteinrichtungen, wobei hydraulische, pneumatische oder elektrische Antriebe in Frage kommen.

Damit das Drehen der Drehvorrichtung mit dem darauf lösbar verbundenen Ladeschlitten problemlos durchführbar ist, ist es besonders vorteilhaft, wenn die einzelnen Führungs- und Antriebsrollen der Transporteinrichtungen jeweils zumindest auf einer Rollenseite mit einem erhöhten Rand ausgestattet sind, so daß die Ladeschlitten geführt und angetrieben werden, jedoch ein "Nach-oben-Wegdrehen" des darauf geführten Ladeschlittens unbehindert bleibt.

Damit die in der eingetauchten Fahrzeugkarosserie eingeschlossenen Luftblasen vollständig auf der Heck- bzw. Frontseite der Fahrzeugkarosserie entweichen können, ist es besonders vorteilhaft, daß die Karosserien durch Drehung um bis zu 210° in das Behandlungsbad eintauchbar sind, wobei - wenn nötig - die im Drehbereich liegenden Transporteinrichtungen herein- bzw. herausfahrbar sind.

Ist es zum Beispiel auf Grund der Anordnung der einzelnen Behandlungsbäder wünschenswert, die Fahrzeugkarosserien durch Drehung um 360° in das Behandlungsbad einzutauchen bzw. herauszuführen, so ist es besonders vorteilhaft, alle im Drehbereich liegenden Transportvorrichtungen bewegbar anzuordnen.

Vorteilhafterweise ist es bei der erfindungsgemäßen Vorrichtung möglich, daß die Fahrzeugkarosserien im getauchten Zustand in beiden Drehrichtungen um bis zu 30° gedreht werden können, um ein verbessertes Entweichen der eingeschlossenen Luftblasen zu ermöglichen.

Vorteilhafterweise sind die Transporteinrichtungen mit den Führungs- und Antriebsrollen außerhalb der Drehvorrichtung beweglich angeordnet, so daß sie während des Tauchvorgangs in eine Position geführt werden können, die das Überfahren des Beckens bzw. Behandlungsbades durch eine oder mehrere nachfolgende Fahrzeugkarosserien ermöglicht, wodurch die Taktrate zu behandelnder Fahrzeugkarosserien bei hintereinander angeordneten Behandlungsbädern weiter erhöht werden kann.

Ist die Drehvorrichtung mit Fixier- und Verriegelungsvorrichtungen zum lösbaren Befestigen eines Ladeschlittens nicht nur auf der Ober- sondern auch auf der Unterseite ausgestattet, so wird bei einer eingetauchten Fahrzeugkarosserie das Aufbringen einer weiteren Fahrzeugkarosserie auf der gleichen Drehvorrichtung durch die am Rand des Behandlungsbades angebrachten Transporteinrichtungen ermöglicht. Vorteilhafterweise werden bei der erfindungsgemäßen Drehvorrichtung zur gleichzeitigen Oberflächenbehandlung mehrerer Fahrzeugkarosserien nur die oberhalb des Behandlungsbades angebrachten Transporteinrichtungen benötigt und nicht - wie bei den bekannten Vorrichtungen - jeweils auf der Ober- und Unterseite.

Mit der erfindungsgemäßen Vorrichtung, bei der die bekannte Ladeschlittentechnik Verwendung findet, wird die erforderliche Kombination der Spritz- und Tauchprozesse ermöglicht, sowohl bei der Vorbehandlung als auch bei der Tauchlackierung der Fahrzeugkarosserien.

Im folgenden wird zur besseren Darstellung und Erläuterung der Erfindung ein Ausführungsbeispiel unter Bezugnahme auf die beigefügten Zeichnungen näher beschrieben und erläutert. Es zeigt:
- Fig. 1: einen schematischen Längsschnitt eines Behandlungsbeckens mit erfindungsgemäßer Vorrichtung zur Oberflächenbehandlung von Fahrzeugkarosserien mit einer Drehvorrichtung,
- Fig. 2: einen schematischen Querschnitt der erfindungsgemäßen Vorrichtung nach Fig. 1, und
- Fig. 3: eine Draufsicht der erfindungsgemäßen Vorrichtung mit Drehvorrichtung und teilweise verfahrbaren Transporteinrichtungen, bei der die Fahrzeugkarosserie nicht dargestellt ist.

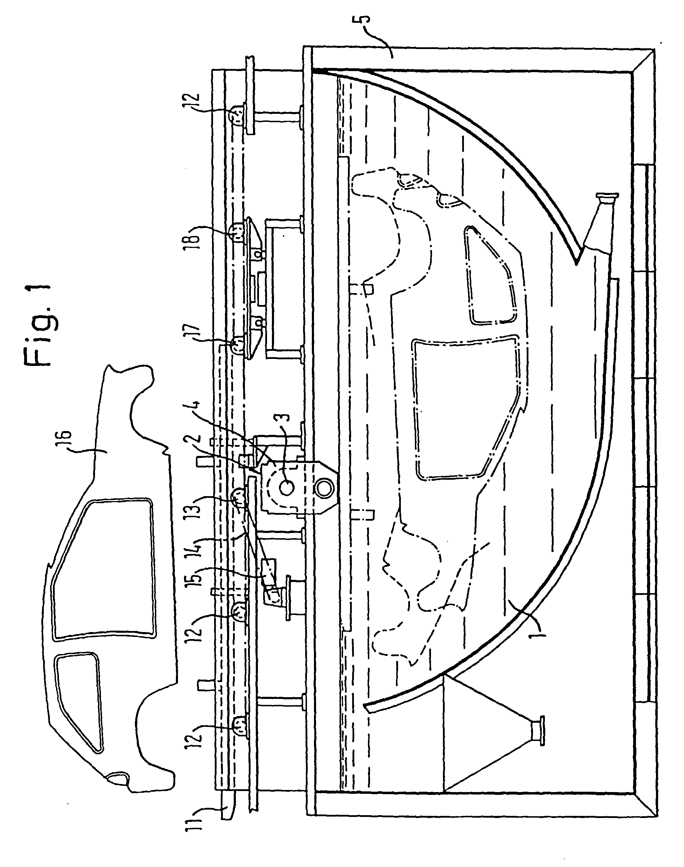

Wie in der Fig. 1 gezeigt, ist bei der erfindungsgemäßen Vorrichtung über einem Behandlungsbecken für das Behandlungsbad 1 eine Drehvorrichtung 2 angebracht. Dabei wird die Drehvorrichtung 2 auf den Enden einer Drehachse 3 rechts und links mit Lagerböcken 4 auf einer Behälterwand 5 abgestützt. Über dem Behandlungsbecken 1 sind Transporteinrichtungen, die als Führungsrollen 12, Antriebsrollen 13 und verschiebbaren Führungs- und Antriebsrollen 17 und 18 ausgebildet sind, angebracht. Die Antriebsrollen 13 werden durch einen Elektromotor 15 mittels eines Förderbandes 14 angetrieben. Ein Ladeschlitten 11 mit einer darauf befestigten Fahrzeugkarosserie 16 ist bei dem in Fig. 1 gezeigten Zustand mittels der nicht angetriebenen Führungsrollen 12 und der angetriebenen Antriebsrollen 13 auf die Drehvorrichtung 2 auftransportiert. In Transportrichtung vor der Fahrzeugkarosserie 16 und dem Ladeschlitten 11 sind weitere Führungsrollen 12 seitlich oberhalb des Behandlungsbades 1 sowie die verschiebbaren Führungs- und Antriebsrollen 17, 18 angebracht.

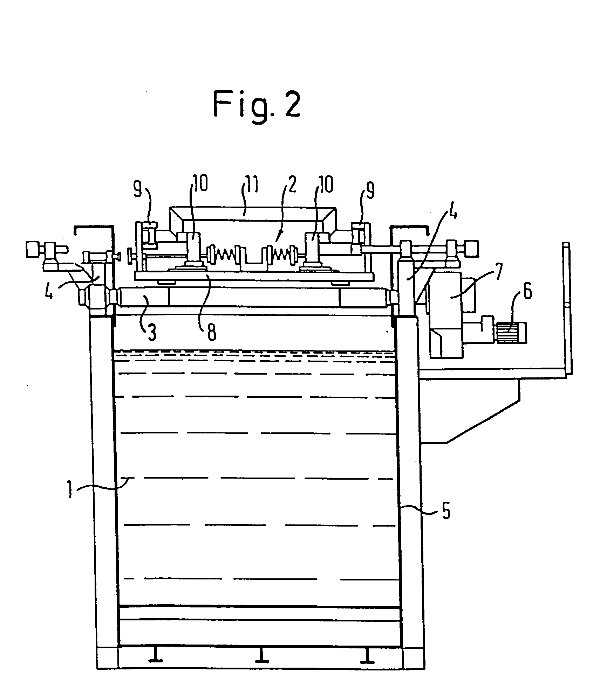

Wie in der Fig. 2 schematisch dargestellt, ist die Drehvorrichtung 2 mit einem Rahmen 8, darauf angebrachten Fixiervorrichtungen 9 sowie Verriegelungsvorrichtungen 10 ausgestattet. Ebenso wird die Lagerung der Drehvorrichtung 2 mittels der Lagerböcke 4, in welche die Enden der Drehachse 3 eingreifen, deutlich. Dabei ist die Drehachse 3 - wie bereits erwähnt - über ein Getriebe 7 durch einen Antrieb 6 angetrieben.

Der Ladeschlitten 11, hier ohne die Fahrzeugkarosserie 16 dargestellt, greift mit seinen Längsträgern in die gabelförmig ausgebildete Fixiervorrichtung 9 ein und wird hierdurch geführt. Die Fixiervorrichtungen 9 dienen der seitlichen Führung der Ladeschlitten 11 beim Transport auf die Drehvorrichtung 2. Die Verriegelungsvorrichtungen 10 umfassen einen verschiebbaren Stift, der jeweils in eine dafür vorgesehene Aussparung seitlich im Ladeschlitten 11 eingreift. Die Verriegelungsvorrichtung 10 kann jedoch auch gabelförmig ausgebildet sein, so daß beim Verriegeln des Ladeschlittens 11 die Gabel in eine entsprechende Aussparung eingreift.

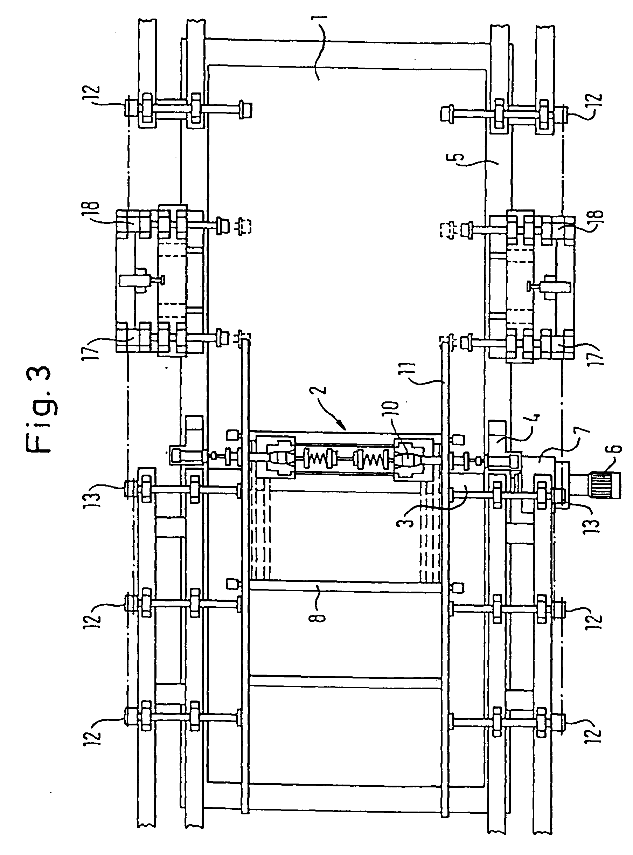

In der in Fig. 3 dargestellten Draufsicht wird die regelmäßige Verteilung der Führungs- 12 und Antriebsrollen 13 sowie der verschiebbaren Führungs- und Antriebsrollen 17 und 18 besonders deutlich. Die Abstände dieser Rollen 12, 13, 17 und 18 ergeben sich durch die schematisch dargestellte Länge des Ladeschlittens 11, so daß dieser immer beim Transport angetrieben und geführt ist. Bei diesem Ausführungsbeispiel sind nur die Führungs- und Antriebsrollen 17 und 18, die vor der nicht eingetauchten Drehvorrichtung 2 und in deren Drehbereich, das heißt um die Drehachse 3, liegen, verschieblich ausgebildet. Dabei ist es jedoch denkbar, daß bei einer 360°-Drehung der Drehvorrichtung 2 auch die hinteren Rollen 12 und 13 verschieblich ausgebildet sind.

Im folgenden wird die Arbeitsweise dieser Ausführungsform der erfindungsgemäßen Vorrichtung erläutert.

Vor Beginn der Oberflächenbehandlung bzw. der Behandlung der Fahrzeugkarosserien im Verbund von mehreren Behandlungsstationen wird die Fahrzeugkarosserie 16 mit einem Ladeschlitten 11 fest verbunden. Der Ladeschlitten 11 wird über die Führungsrollen 12 und mit Hilfe der Antriebsrollen 13 auf die Drehvorrichtung 2 transportiert. Hierbei wird die Ladepalette des Ladeschlittens 11 durch die Seitenführungen der Fixiervorrichtung 9, die am Rahmen 8 der Drehvorrichtung 2 angebracht sind, geführt.

Ist der Ladeschlitten 11 in der richtigen Position auf der Drehvorrichtung 2, so wird der Getriebemotor 15 der Antriebsrollen 13 gestoppt und der Ladeschlitten mit der Drehvorrichtung 2 durch die Verriegelungsvorrichtungen 10 miteinander fest verbunden. Dies geschieht durch Einklemmen oder durch Bolzen der Verriegelungsvorrichtungen 10, welche im Ladeschlitten 11 eingreifen.

Danach werden die beweglichen Führungsrollen 17 und die beweglichen Antriebsrollen 18 über dem vorderen Bereich des Behandlungsbeckens 1 aus dem Drehbereich der Drehvorrichtung 2 herausgeführt, d.h. nach außen durch Hubzylinder verschoben, um ein anschließendes Drehen der Fahrzeugkarosserie 16 mit der Drehvorrichtung 1 bis zu 180° oder mehr zu ermöglichen. Beim Drehvorgang taucht die Drehvorrichtung 1 mit dem Ladeschlitten 11 und der darauf befestigten Fahrzeugkarosserie 16 in das Behandlungsbad 1 ein. Nach Beendigung des Drehvorgangs ist die Fahrzeugkarosserie 16 nun vollständig im Behandlungsbad 1 eingetaucht. Durch die Drehung sind die bisherigen Ober- und Unterseiten der Drehvorrichtung 2 miteinander vertauscht worden.

Für den Fall, daß die Fahrzeugkarosserie 16 in umgekehrter Drehrichtung in das Behandlungsbecken 1 eingetaucht werden soll, sind die beweglichen Transporteinrichtungen 17 und 18 über dem hinteren Bereich des Beckens 1 angebracht.

Ist eine Drehung um mehr als 180° erwünscht, dann können je nach gefordertem Drehwinkel die beweglichen Führungs- und Antriebsrollen 17 und 18 sowohl über dem vorderen als auch über dem hinteren Bereich des Behandlungsbeckens 1 so ausgeführt werden, daß sie aus dem Drehbereich heraus- und hereingeführt werden können. Dadurch wird der gesamte Bereich über dem Behandlungsbecken 1 für eine Drehbewegung in beliebiger Richtung und beliebigen Drehwinkels frei gemacht.

Sobald der Eintauchvorgang bzw. die Drehbewegung eine Position zuläßt, in welcher die in den Drehbereich heraus- und hereinführbaren Führungs- 17 und Antriebsrollen 18 die Drehbewegung nicht mehr behindern, werden diese Rollen 17 und 18 entsprechend in ihre Ausgangsposition zurückgeführt. Ein Uberfahren des Behandlungsbeckens 1 durch eine nachfolgende Fahrzeugkarosserie 16 auf einem Ladeschlitten 11 ist nun möglich.

Ist ein Schwenken der Fahrzeugkarosserie 16 im getauchten Zustand gewünscht, dann können die in den Drehbereich heraus- und hineinführbaren Führungs- 17 und Antriebsrollen 18 in den Drehbereich heraus- und hineingeführt werden, um das Schwenken der Fahrzeugkarosserie 16 in beide Drehrichtungen zu ermöglichen.

Bei einem nicht gezeigten weiteren Ausführungsbeispiel ist nicht nur die Ober- sondern auch die Unterseite der Drehvorrichtung mit einer Fixier- 9 und Verriegelungsvorrichtung 10 versehen. Bei eingetauchter Fahrzeugkarosserie 16 ist dann auf der jetzigen Oberseite eine Fixierung eines weiteren Ladeschlittens 11 möglich. Durch Drehung um weitere 180° oder durch Zurückdrehen um 180° wird die neue aufgesetzte Fahrzeugkarosserie in das Behandlungsbad 1 eingetaucht, und gleichzeitig die behandelte Fahrzeugkarosserie aus diesem herausgeführt.

## Patentansprüche

1. Vorrichtung zur Oberflächenbehandlung einer oder mehrerer Fahrzeugkarosserien (16) mit
- einer Drehvorrichtung (2), mit der zumindest eine auf einem Ladeschlitten (11) angebrachte Fahrzeugkarosserie (16) lösbar verbindbar ist und die durch Drehung die Fahrzeugkarosserie (16) in ein Behandlungsbad (1) eintaucht und sie wiederum durch eine Drehung aus diesem herausführt,
- Transporteinrichtungen (12, 13, 17, 18) zum Aufund Abtransportieren des Ladeschlittens (11) auf die bzw. von der Drehvorrichtung (2),
dadurch **gekennzeichnet**, daß
- die Transporteinrichtungen (12, 13, 17, 18) außerhalb des Behandlungsbades (1) angebracht sind und
- die im Drehbereich der Drehvorrichtung (2) liegenden Transporteinrichtungen (17, 18) aus diesem heraus- bzw. hereinbewegbar sind.

2. Vorrichtung nach Anspruch 1, dadurch gekennzeichnet, daß die Transporteinrichtungen aus Führungs- (12) und Antriebsrollen (13) bestehen.

3. Vorrichtung nach Anspruch 1 oder 2, dadurch gekennzeichnet, daß die heraus- bzw. hereinführbaren Transporteinrichtungen (17, 18) durch eine Verfahreinrichtung, wie z.B. ein Hubzylinder, elektrischer Antrieb oder auch Kettenantrieb, verschiebbar sind.

4. Vorrichtung nach einem der vorhergehenden Ansprüche 1 bis 3, dadurch gekennzeichnet, daß die Transporteinrichtungen (12, 13, 17, 18) Laufrollen umfassen, die zumindest auf einer Rollenseite einen erhöhten Rand aufweisen, so daß die Ladeschlitten (11) führbar und antreibbar sind.

5. Vorrichtung nach Anspruch 1, dadurch gekennzeichnet, daß die Fahrzeugkarosserie (16) durch Drehung um mehr als 210° in das Behandlungsbecken (1) eintauchbar und wiederum durch eine Drehung aus diesem herausführbar ist.

6. Vorrichtung nach Anspruch 1, dadurch gekennzeichnet, daß die Fahrzeugkarosserie (16) durch Drehung um 360° in das Behandlungsbecken (1) eintauchbar und herausführbar ist.

7. Vorrichtung nach Anspruch 1, dadurch gekennzeichnet, daß die Fahrzeugkarosserie (16) im getauchten Zustand in beide Drehrichtungen um bis zu 30° drehbar ist, um eingeschlossenen Luftblasen das Entweichen zu ermöglichen.

8. Vorrichtung nach einem oder mehreren der Ansprüche 1 bis 5, dadurch gekennzeichnet, daß die für den Transport der Fahrzeugkarosserien (16) benötigten Transporteinrichtungen in Form von Führungs- (17) und Antriebsrollen (18) außerhalb der Drehvorrichtung (2) beweglich so angeordnet sind, daß sie während des Tauchvorgangs in eine Position geführt werden können, die das Überfahren des Beckens (1) durch eine oder mehrere nachfolgende Fahrzeugkarosserien (16) ermöglicht.

## Claims

1. Apparatus for the surface treatment of one or more vehicle bodies (16) with
- a turning device (2) to which at least one vehicle body (16) mounted on a loading carriage (11) can be connected releasably and which immerses the vehicle body (16) in a treatment bath (1) by rotation and takes it out again by rotation,
- transport means (12, 13, 17, 18) for transporting the loading carriage (11) onto or from the turning device (2),
characterised in that
- the transport means (12, 13, 17, 18) are mounted outside the treatment bath (1) and
- the transport means (17, 18) located in the turning range of the turning device (2) can be moved in and out of it.

2. Apparatus according to claim 1, characterised in that the transport means consist of guide (12) and drive (13) rollers.

3. Apparatus according to claim 1 or 2, characterised in that the transport means (17, 18) which can be moved in and out are displaceable by a traversing mechanism such as e.g. a lifting cylinder, electric drive or chain drive.

4. Apparatus according to any of the preceding claims 1 to 3, characterised in that the transport means (12, 13, 17, 18) include rollers which have a raised edge at least on one roller side, so that the loading carriages (11) can be guided and driven.

5. Apparatus according to claim 1, characterised in that the vehicle body (16) can be immersed in the treatment tank (1) by rotation through more than 210° and taken out of it again by rotation.

6. Apparatus according to claim 1, characterised in that the vehicle body (16) can be immersed in the treatment tank (1) and taken out by rotation through 360°.

7. Apparatus according to claim 1, characterised in that the vehicle body (16) in the immersed state is rotatable in both directions of rotation through up to 30° to allow trapped air bubbles to escape.

8. Apparatus according to one or more of claims 1 to 5, characterised in that the transport means needed for transport of the vehicle bodies (16) in the form of guide (17) and drive (18) rollers are arranged so as to be movable outside the turning device (2) in such a way that they can be guided during the immersion process into a position which allows one or more successive vehicle bodies (16) to pass through the tank (1).

## Revendications

1. Dispositif destiné au traitement de surface d'une ou plusieurs carrosseries de véhicule (16), comprenant:
- un dispositif de rotation (2) auquel peut être reliée de manière amovible au moins une carrosserie de véhicule (16) placée sur un chariot de chargement (11), et qui, par rotation, fait plonger la carrosserie de véhicule (16) dans un bain de traitement (1) et l'en extrait à nouveau par une rotation,
- des mécanismes de transport (12, 13, 17, 18) pour amener le chariot de chargement (11) sur le dispositif de rotation (2) et pour l'en évacuer,
**caractérisé en ce que**
- les mécanismes de transport (12, 13, 17, 18) sont disposés en-dehors du bain de traitement (1), et
- les mécanismes de transport (17, 18) situés dans la zone de rotation du dispositif de rotation (2), peuvent être déplacés hors de celle-ci et dans celle-ci.

2. Dispositif selon la revendication 1, **caractérisé** en ce que les mécanismes de transport sont constitués de galets de guidage (12) et de galets d'entraînement (13)

3. Dispositif selon la revendication 1 ou 2, **caractérisé** en ce que les mécanismes de transport (17, 18) pouvant être amenés dans la zone de rotation et extraits de celle-ci, peuvent être déplacés en coulissement par un dispositif de déplacement, tel que par exemple un vérin de déplacement, un dispositif d'entraînement électrique ou bien également un dispositif d'entraînement par chaîne.

4. Dispositif selon l'une des revendications 1 à 3 précédentes, **caractérisé** en ce que les mécanismes de transport (12, 13, 17, 18) comprennent des galets qui présentent sur au moins un côté du galet, un bord surélevé, de façon à ce que les chariots de chargement (11) puissent être guidés et entraînés.

5. Dispositif selon la revendication 1, **caractérisé** en ce que la carrosserie de véhicule (16) peut être plongée par rotation de plus de 210°, dans le bac de traitement (1) et peut à nouveau en être extraite par une rotation.

6. Dispositif selon la revendication 1, **caractérisé** en ce que la carrosserie de véhicule (16) peut être plongée dans le bac de traitement (1) et en être extraite par une rotation de 360°.

7. Dispositif selon la revendication 1, **caractérisé** en ce que la carrosserie de véhicule (16), lorsqu'elle se trouve dans l'état de plongée, peut être tournée dans les deux sens de rotation, jusqu'à 30°, pour permettre à des bulles d'air enfermées de s'échapper.

8. Dispositif selon l'une ou plusieurs des revendications 1 à 5, **caractérisé** en ce que les mécanismes de transport nécessaires au transport des carrosseries de véhicule (16) sont disposés sous la forme de galets de guidage (17) et de galets d'entraînement (18), à l'extérieur du dispositif de rotation (2), de façon telle, que durant l'opération de plongée, ils puissent être conduits dans une position permettant à une ou plusieurs carrosseries de véhicule (16) suivantes, de passer au-dessus du bac (1).
